# EUROPEAN PATENT APPLICATION

(11) **EP 1 440 778 A2**
(43) Date of publication of application: **28.07.2004**
(21) Application number: 04100255.1
(22) Date of filing: 23.01.2004
(51) Int. Cl.: B27B 31/00, B27B 29/00

(54) **Machine for preparing firewood**

(30) Priority: 24.01.2003 IT UD20030018
(71) Applicant: Pinosa, Mauro, 33010 Lusevera (UD) (IT)
(72) Inventor: Pinosa, Mauro, 33010 Lusevera (UD) (IT)
(74) Representative: Petraz, Gilberto Luigi

(57) **Abstract**

Machine for preparing cut and/or chopped firewood, comprising feed means, cutting means (14), gripping means cooperating with the cutting means (14), chopping means (15), collection means and discharge means (16) to discharge the cut and/or chopped pieces. The gripping means (29), the feed means (13, 25) and the collection means (73) are of the unified type and are able to operate without distinction both on individual trunks (12) of any diameter and also on bundles or groups of trunks (12), branches, loppings or faggots (84), sawmill scraps, carpenter's scraps or other similar element to be cut to size and/or chopped.

## Description

### FIELD OF THE INVENTION

The present invention concerns a machine, prevalently automatic or semi-automatic, for preparing firewood in pieces or logs, starting from whole pieces of wood with a relatively large diameter, such as for example tree trunks or segments of trunk, and/or with a relatively small diameter, such as for example branches, faggots, sawmill scraps, carpenter's scraps, planking or suchlike.

To be more exact, the machine according to the present invention comprises transport means, gripping means, chopping means and discharge means which allow to work irrespectively both a single trunk and bundles of wood of whatsoever type, shape, diameter and/or section, possibly controlling the machine even from a single work station and hence with the advantage that a single operator can manage and control the whole functioning thereof.

The invention also allows to work efficiently bent, deformed and/or knotty trunks, discharging the unsuitable pieces in an appropriate manner and preparing only the suitable pieces of wood for chopping.

The machine according to the invention can be configured for cutting only, for chopping only or for both cutting and chopping all types of wood.

In another embodiment, the machine can be divided into a section dedicated to cutting and a section dedicated to chopping, connected or not by a conveyor belt; in this case, two operators are preferably required, one for each section of the machine.

### BACKGROUND OF THE INVENTION

It is known that to produce firewood starting from whole pieces of wood, automatic or semi-automatic or prevalently manual machines are used which perform in sequence the operations to cut crosswise and chop lengthwise the whole pieces of wood, in order to make pieces or logs suitable for use in heaters, fireplaces, wood cookers or suchlike. One of such known automatic/semi-automatic machines is described for example in the patent EP-B-0 901 892.

Although they provide considerable advantages in terms of time, costs and standardization of the product obtained, such known machines have considerable problems when they have to work both trunks and faggots or scraps in general, or when they are operating on trunks that are even partly bent, deformed or knotty; this is because they do not guarantee an effective clamping operation during the cutting step and because they have problems during the transport step, both upstream and downstream of the cutting means, during the cutting step, the chopping step and during the discharge step.

Another shortcoming of known machines is that the wood is loaded slowly because it is necessary to wait for the feed means to return to the start-of-cycle position.

Moreover, known machines are often subject to obstacles and blockages, both during the loading of the whole pieces and also during the transfer of the cut pieces towards the chopping step, which oblige the operators to intervene manually, stopping the machine, removing the impediment and re-activating the cycle.

In general, moreover, such machines are not equipped to work effectively, and possibly with a single operator, both trunks of any type, even defective, bent or knotty, and branches, faggots, scraps or suchlike, of any length and/or diameter, thus entailing the need for additional working, mainly manual, which leads to an increase in times and costs for preparing the firewood.

Applicant has devised and embodied the present invention to overcome these shortcomings of the state of the art and to obtain other advantages.

### SUMMARY OF THE INVENTION

The present invention is set forth and characterized in the main claim, while the dependent claims describe other innovative characteristics of the invention.

One purpose of the invention is to achieve a prevalently automatic or semi-automatic machine for preparing firewood starting from pieces of wood of any diameter which will allow, possibly controlled by a single operator arranged in a single work station, to work both individual trunks to be cut and chopped, and also bundles of small trunks, branches, faggots or scraps, of any length, which do not necessarily require chopping.

Another purpose is to achieve a machine that can be configured to perform only chopping operations, only cutting operations, or both.

Another purpose is to achieve a high productivity machine, which will reduce the risk of obstacles and blockages, that require a manual intervention, and which will allow to discharge in a substantially automatic manner those pieces that are not suitable for chopping.

The present invention is applied to a prevalently automatic or semi-automatic machine for preparing firewood, of the type comprising at least: feed means to move the trunks, bundles of trunks, branches, faggots, scraps, etc.; cutting means; one or more gripping means, of which at least one is located upstream of the cutting means and at least one can be movable on the length of the trunk so as to move with respect thereto; chopping means to possibly chop the cut trunks into logs; collection means and selective discharge means for the chopped logs and/or the branches, faggots, scraps etc. or for the bent and/or knotty trunks which are merely cut.

According to a preferential embodiment, the machine also comprises automatic loading means to load the material to be cut and/or chopped, from a storage magazine to the feed channel which transports the material towards the cutting means.

According to the invention, the possible loading means, the gripping means, the feed means and the collection and discharge means are suitable to operate without distinction, and without requiring modifications in configuration or set-up, on individual trunks of any diameter, shape or size, or on bundles or groups of trunks, for example, branches, sticks, faggots, scraps or suchlike to be cut to size and/or chopped.

The feed means comprise a thruster element with an alternate linear movement suitable to translate the trunks, branches, etc. towards the cutting means, and at least a transfer assembly, able to be activated selectively, to transfer the cut pieces of the trunks towards the chopping means.

In an advantageous embodiment of the invention, the transfer assembly that transfers the cut pieces to the chopping step is of the chain type with a continuous movement, in order to reduce the dead times deriving from the return to start-of-cycle position.

According to a preferential embodiment, the movement of the transfer assembly is of the two-directional type; this allows to selectively discharge cut pieces of the trunk from the machine, for example deformed, conical or knotty pieces, when they are not suitable to be sent to be chopped, or can entail risks of damaging the chopping grid. There will therefore be a movement in one direction to transfer suitable pieces from the cutting zone to the chopping zone, and a movement in the opposite direction to discharge unsuitable pieces from the machine.

According to another preferential embodiment, the transfer assembly is of the type with a speed that can vary according to the type, size and quality of the piece to be transferred.

The machine according to the invention comprises command and selection means that allow the operator to set the functioning either for trunks that also have to be chopped, with transfer means and chopping means being activated, or for branches, faggots etc., with the transfer means being excluded and the merely cut pieces being directly discharged.

This direct discharge can also occur in the case of bent, knotty and/or deformed trunks, which cannot be chopped and which therefore, after cutting, are directly discharged in the same way as faggots, loppings and scraps.

The thruster element of the feeder arranged upstream of the cutting means has a plate attached to one arm which allows it to be raised, by means of a suitable actuator, at least during the return travel, in order to move to a position of non-interference with the feed means and thus allow new wood to be loaded therein without waiting for the plate to be repositioned in the start-of-cycle position. The positioning of non-interference is such that the loading of the new wood can take place in whatsoever position the thruster element finds itself along its return travel.

According to a variant, the thruster element is repositioned not in a fixed start-of-cycle position but in correspondence with the leading end of the new trunk. This controlled repositioning can take place either manually, interrupting the return travel by a command from the operator when the thruster element has passed the end of the trunk, or automatically; in this solution the thruster element is stopped either according to the automatic reading of the length of the trunk, or using sensor means that detect the presence or absence of the trunk with respect to the position of the thruster element.

The transfer assembly, downstream of the cutting means, comprises a transporter member provided with means that translate the cut pieces towards a cradle element. The transporter member is conformed so as to allow the pieces of cut trunks to be transferred to the chopping means, and to operate irrespectively whatever the diameter of the trunk. Moreover, the transfer occurs without needing to raise the piece of trunk and without having recourse to pivoting or translating mechanisms, which make the cut piece fall and thus cause blockages and/or accidental damage to the structures or accidents for the workers.

As we said above, the transporter member is advantageously of the type with a continuous and two-directional movement, if it is required not to transfer, and then discharge, to the chopping zone cut pieces that are not suitable to be chopped.

According to an advantageous embodiment of the invention, the supporting plane of the transporter member includes means that prevent the cut piece from rolling, thus obviating the risk that pieces of a large diameter with respect to their length might turn over on one side during the transfer.

The cradle element is of the type that yields forwards, in order to absorb the stresses and pressures generated by the chopping operation and to produce a lesser quantity of waste.

According to an advantageous variant, the cradle element includes holes on the bottom to encourage the discharge of fragments or little pieces, for example of bark, preventing them from being dragged backwards by the chopping means and accumulating behind them, creating a thickness that, growing over time, could damage or compromise the functioning of the chopping means themselves.

The transporter member is in any case configured so as to also allow the transfer of the cut pieces in any inclined position of the cradle element, which prevents waiting times in the transfer step.

The gripping means according to the invention comprise at least a plate with a curved pressure edge, with the curve facing downwards and conformed substantially as an umbrella handle, arranged at least upstream of said cutting means.

The curved plate allows to press extremely effectively both a single trunk of any diameter and bundles of trunks, branches or faggots, guaranteeing an optimum action of pressure and centering which ensures efficient cutting conditions. To be more exact, when loppings, scraps or suchlike are cut, the curved configuration of the pressure plate not only guarantees to contain the cut pieces, which tend to move uncontrollably during and after the cutting operation, but also exerts an action of compaction: the greater the movement, the greater the compaction action. This ensures an optimum centering of the wood and optimum conditions for the cutting and discharge thereof. According to a variant, the feed cradle where the pieces of wood are fed has an at least partly conical bottom, so that the combination of using a curved pressure plate and the conical bottom guarantees that the wood is always perfectly centered with respect to the cutting means.

According to an advantageous variant, at least the central part of the pressure plate has a widened section to prevent said plate, for example in the case of fresh or tender wood, from cutting into the wood or sticking into it, causing an undesired lifting thereof during the return movement of the plate.

According to another variant, detector means are mounted on the pressure plate able to detect the diameter of the trunk to be cut. According to another variant, the detector means comprise sensors or optical barriers, for example laser or other type, arranged at the sides of the feed cradle.

By detecting the diameter of the trunk to be cut, it is possible to set the travel of the cutting means so as to reduce to a minimum empty travels, thus reducing the dead times. Moreover, the value of the diameter is transmitted to the movement and selection means of the chopping grids, so it is possible both to choose the most suitable chopping grid and also to perfectly center the chosen grid according to the longitudinal axis of the trunk.

The collection means according to the invention comprise a conveyor movable between a position cooperating with the cutting means, and in line with them, and a remote position, so as to allow to directly discharge, from the cutting means, the pieces of branches, faggots, etc., which have been cut to size, without passing through the chopping means.

In this way we considerably reduce the dead times due to the empty passage of branches or faggots through the chopping means, thus reducing the production costs.

### BRIEF DESCRIPTION OF THE DRAWINGS

These and other characteristics of the present invention will become apparent from the following description of a preferential form of embodiment, given as a non-restrictive example with reference to the attached drawings wherein:
- figs. 1a, 1b and 1c show respectively a view from above, a side view and a view from behind of the machine to produce firewood according to the invention;
- fig. 1d shows an enlarged detail of fig. 1c;
- fig. 2a shows a front view of the cutting zone of the machine in fig. 1a;
- figs. 2b, 2c show two variants of fig. 2a;
- fig. 3 shows an enlarged detail of the machine according to the invention;
- fig. 4a shows a side view of the transfer assembly from the cutting zone to the chopping zone;
- fig. 4b shows a front view of fig. 4a;
- fig. 4c shows a view from above of a variant of fig. 4a;

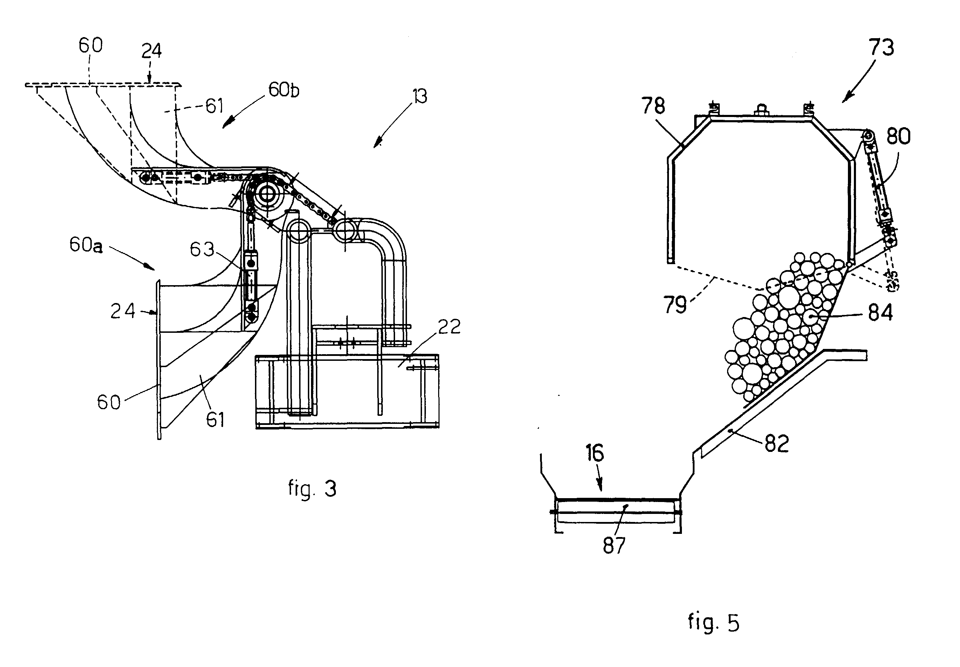

- fig. 5 shows a detail of the discharge zone of the machine in fig. 1a.

### DETAILED DESCRIPTION OF A PREFERENTIAL FORM OF EMBODIMENT

With reference to the attached figures, a prevalently automatic or semi-automatic machine 10 according to the invention for preparing firewood, or logs 49, comprises in the case shown here a loading or feed assembly 11 for pieces of wood 12, such as trunks or branches of any diameter, scraps, faggots or suchlike, a feed assembly 13, a cutting assembly 14, a gripping assembly 29, a transfer assembly 25 and a chopping assembly 15, arranged in sequence.

At outlet from the chopping assembly 15 there is a discharge assembly 16, in this case a belt-type conveyor, to discharge the logs 49 produced.

The automatic or semi-automatic machine 10 also comprises a collection assembly 73, arranged downstream of the cutting assembly 14 and substantially adjacent to the discharge assembly 16. The collection assembly 73 allows to directly discharge the cut pieces of wood 12 of small size, such as branches, scraps, faggots or suchlike, which do not need to be chopped, after they have been cut, into pieces of a desired length, or with the number of desired pieces.

There is also a command pulpit from which a single operator 81, acting on a control panel 82, can command the functioning of the whole machine 10. There may be two operators present when the machine is divided into two distinct sections, one dedicated to cutting and one dedicated to chopping.

The loading assembly 11 in this case comprises a supporting frame 74 to which are associated, by means of pairs of toothed wheels 17, transport chains 18 provided with pegs 19 to transport and discharge the pieces of wood 12 into the feed cradle 20 of the feed assembly 13.

In proximity with the end of the chains 18 facing towards the machine there are hooked teeth 19, the function of which is to unload in a controlled manner the wood fed by the loading assembly 11 into the feed channel of the machine 10.

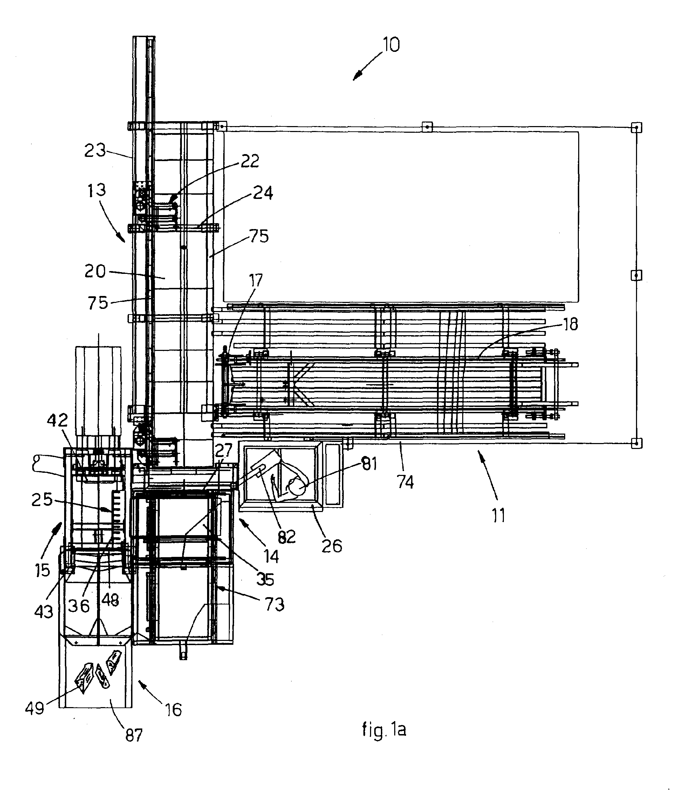

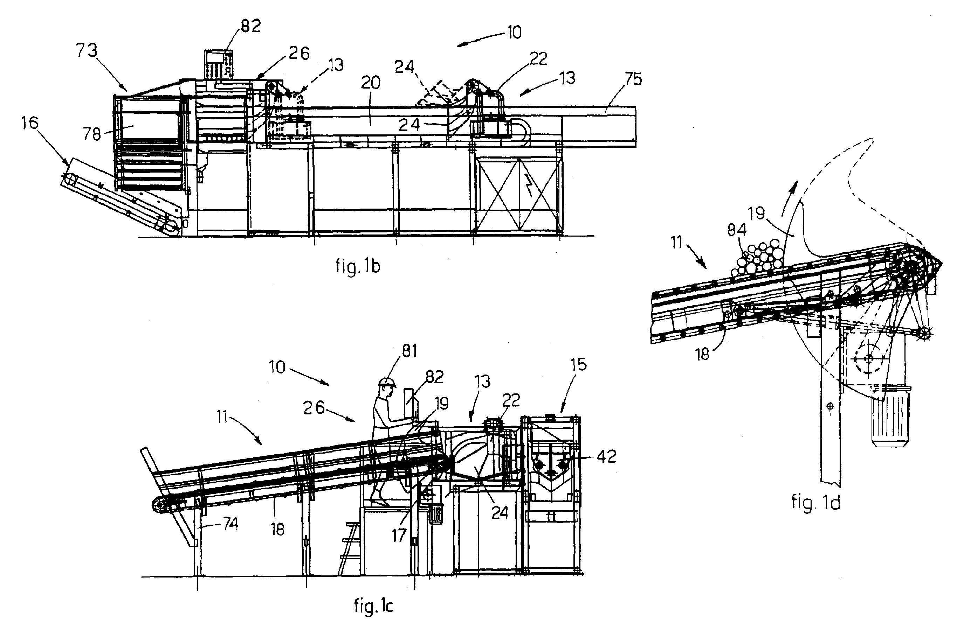

The hooked teeth 19 are of the type that pivot around an oscillation pin, to rotate in the direction of the arrow shown in fig. 1d, and then in the opposite direction, from a retracted position below the supporting plane to a raised position, in order to unload the trunks, branches or faggots into the feed channel of the feed assembly 13 of the machine, as will be described hereafter.

The teeth 19 have a hooked end in order to allow the possible penetration through two adjacent trunks or branches, to pick up one at a time, or through a bundle of loppings 84, separating the desired quantity thereof. Moreover, the hooked teeth 19 have a curved rear wall, in order to prevent faggots, loppings or small parts of a trunk from getting jammed under them when the tooth 19 moves to the retracted position in order to allow the feed beyond it of the wood that is to be discharged into the machine.

The feed assembly 13 comprises, as already said, a feed cradle 20 defining a channel and a motorized trolley 22 that displaces longitudinally the whole pieces of wood 12 along the channel until they are taken into cooperation with the cutting assembly 14.

The feed cradle 20 has a substantially V-shaped transverse section, to contain the whole pieces of wood 12 laterally, and two side-walls 75 to laterally contain possible bundles of wood, branches, and scraps 12, in the event of simultaneous working.

According to a variant not shown here, the feed cradle 20 has a transverse section defining a line broken into five or more parts, converging downwards, in order to ensure the correct positioning and centering of the wood to be fed.

The motorized trolley 22 moves in a known manner along a rail 23 and has thruster means 24 at the front, in order to progressively displace the whole pieces of wood 12 towards the cutting assembly 14 during the cutting steps.

The thruster means 24 consist of a substantially plane plate 60 mounted on a supporting arm 61 pivoting by means of an actuator 63 with respect to a pin 62. The plate 60 can assume a first lowered thrusting position 60a, when it has to act on the pieces of wood arranged in the feed cradle 20, and at least a second raised position 60b, shown by dashes in fig. 3, assumed at least in the return step, and free from interference with the feed cradle 20. The position of non-interference of the thruster means 24 is such as to allow wood of any shape or size to be loaded into the cradle 20.

Since the plate 60 can be raised by means of the actuator 63, thus freeing the cradle 20 during the repositioning travel, it is possible to load new pieces of wood 12 during said travel, reducing to a minimum the dead times and thus increasing productivity.

As said above, the repositioning of the thruster means 24 can be carried out in a fixed start-of-cycle position, in a position programmed according to whether the length of the new trunk is known, in a position detected instantly by sensors which read the presence of the trunk and command the thruster means 24 to stop immediately upstream of its end, or on each occasion upon a command from the operator.

The cutting assembly 14 has at least a saw 27, in this case with a circular blade, or any other type, mounted on a supporting trolley 55 movable by means of an actuator 54. The movement of the saw can take place either vertically, from up to down or from down to up, or transversely, on a substantially horizontal plane, with respect to the longitudinal axis of the pieces of wood 12.

The saw 27 can be moved between a first position of non-interference, wherein the trunk or the bundle advances along the feed cradle 20, and a second cutting position.

Advantageously the movements of the saw 27 are correlated to the advance of the trolley 22 and are calculated by an electronic control and drive assembly 26, for example with a programmable logic or suchlike. The control assembly determines a minimum travel of the saw 27 according to the value detected of the diameter of the pieces of wood 12 to be cut. The diameter can be detected either by means of contact feelers or by means of optical sensors, or any other suitable means.

The machine 10 has not only means to detect the diameter but also means to detect the presence and means to measure the length of the pieces of wood 12 loaded onto the feed assembly 13.

The machine 10 can be set either to cut measurements equal to whole sub-multiples of the overall length of the wood, in order to prevent wastage, or to make cuts with a specific required measurement, in this case creating waste. Another possibility can include the cutting and discharge of a leading off-cut with a determinate length and then cuts can be made equal to whole sub-multiples of the residual length of the trunk.

When working with short pieces of wood, the machine can also be set to perform a desired number of cuts, for example only one, or two or three, on the length of the piece of wood, thus subdividing it electronically into equal parts. A further possibility can include making a desired number of cuts irrespective of the length of the cut piece and/or whether off-cuts are obtained or not.

During the cutting steps, the pieces of wood 12, or the bundles of wood, are clamped in position by a gripping assembly 29 arranged upstream of the saw 27.

It comes within the field of the invention that two gripping assemblies 29 are included, one upstream and one downstream of the saw 27. It also comes within the field of the invention to have two gripping assemblies 29, one fixed and immediately upstream of the saw 27, and one movable located further upstream, the function of which is to clamp the rear end of branches or faggots, preventing them from rising up when they are clamped in proximity with the saw 27 and immediately before cutting.

Each of the gripping assemblies 29 comprises a substantially L-shaped plate 76, lying on a vertical plane and comprising a pressure element 76a and a vertical supporting element 76b, advantageously made in a single piece, for example shaped like an umbrella handle. The pressure element 76a is located, in use, above the feed cradle 20 and has at least a curved lower edge 77 facing the pieces of wood, branches etc. 12 to be cut.

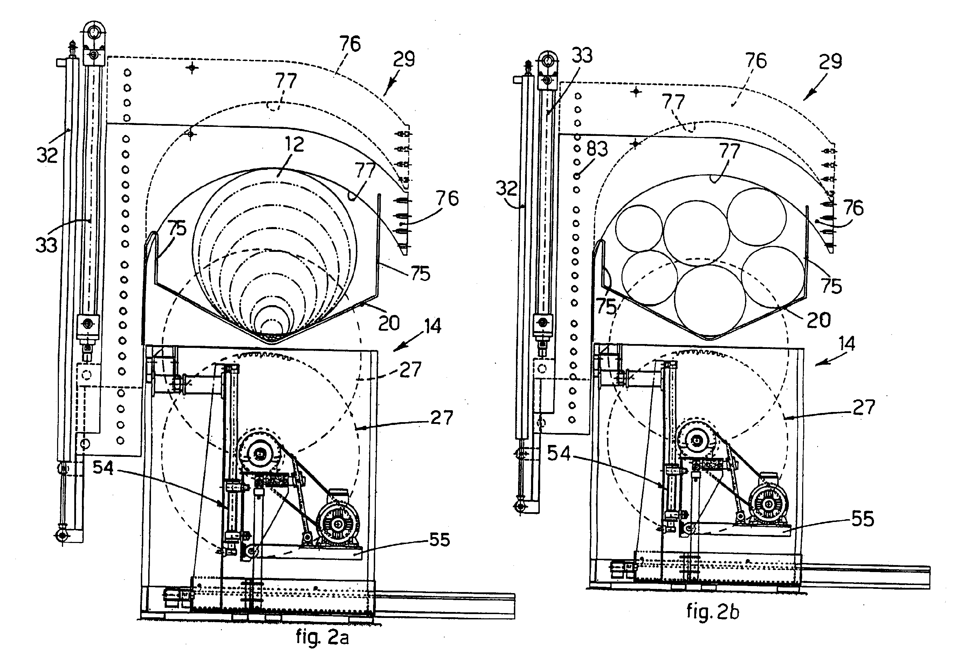

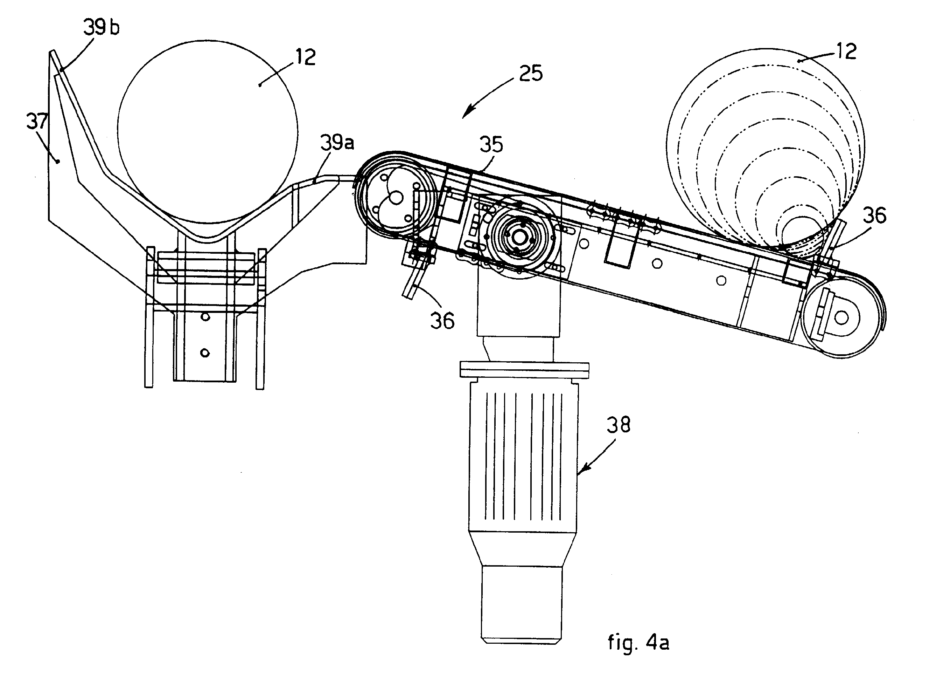

The plate 76 is also movable along a vertical guide 32 by means of an actuator 33, between a first high position to feed the wood, shown by dashes in figs. 2a-2c, wherein its lower edge 77 does not interfere with the pieces of wood 12 and allows the latter to slide along the cradle 20, and a second clamping position with a guillotine or choke, shown in a continuous line, wherein the lower edge 77 is taken into contact with the pieces of wood 12 to keep them pressed and centered against the cradle 20, so as to allow the saw 27 to make the cut.

Although not shown here, the curved lower edge 77 advantageously includes a wider part, at least in correspondence with its central zone, in order to prevent it from cutting into, and actually cutting, fresh or tender trunks during the pressure step due to the high pressures generated, with the risk that it might take the trunk with it during the lifting step.

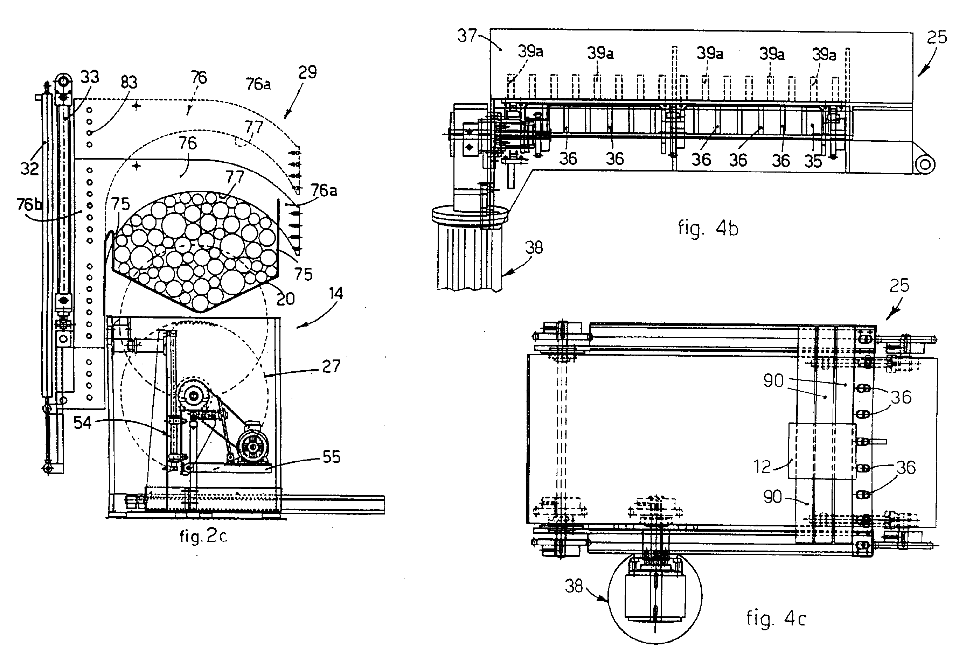

Using a plate 76 of this type, with a curved pressure edge 77, possibly widened in its central zone, associated with a lifting/lowering actuator 32, allows to work both a single trunk of any diameter whatsoever (as can be seen in the lines of dashes in fig. 2), and bundles of trunks, branches or faggots, in any case guaranteeing an optimum pressure action that ensures efficient cutting conditions.

The greater the tendency of the pieces to move during and after cutting, the greater the pressure exerted by the plate 76: the result is an optimum compacting and centering action, particularly in the case of loppings and scraps.

Downstream of the cutting assembly 14 there is the transfer assembly 25, which comprises in the case shown here an inclined, chain-type transporter 35, provided with a plurality of rows of blade elements 36, two in the case of fig. 4a, able to translate the cut pieces towards a chopping cradle 37 associated with the chopping assembly 15. The chopping cradle 37 yields forwards since it is associated with elastic means below.

The normal cycle provides that every cut piece is transferred, by the transfer assembly 25, towards the chopping position, as will be described in detail hereafter.

According to a variant, particularly in the case of cut pieces of a regular shape and without substantial defects, the cycle may include cutting two, three or more pieces, and transferring them simultaneously towards the chopping cradle and then simultaneously chopping them.

The chain-type transporter 35, immediately downstream of a relative row of blade elements 36, has a series of shutters 90 adjacent to each other on the plane supporting the wood, advantageously slightly distant from each other. The shutters 90 prevent the piece of trunk 12 from rolling on the supporting plane, and impose a simple translation thereon; this prevents the piece of trunk 12, particularly if it has a large diameter with respect to its length, from turning over on one side during its advance, creating a blockage which requires the machine to be stopped. In a variant that is not shown here, there may be sheets of metal, which can be selectively positioned, acting as a lateral barrier against such overturning.

The chain-type transporter 35 is driven in this case by a motor-reducer member 38. It is also provided that, instead of the motor-reducer member 38, any other suitable type of actuator can be used.

The motor-reducer member 38 is suitable to be driven on command in both directions; this gives the possibility to discharge outside the machine cut pieces that are not suitable to be transferred to the chopping section, for example because they are bent, deformed or knotty. This discharge is achieved by commanding the chain-type transporter 35 to advance in the direction away from the position of the cradle 37, so that the unsuitable piece can be discharged easily, automatically and with a very short interruption in the normal cycle.

In an advantageous embodiment, the motor-reducer member 38 is of the type with a variable and adjustable speed. To be more exact, its speed can be set at a maximum value in the event that the pieces to be transferred are very long, with a regular, uniform and correct shape, so that there is no risk of their turning over, of blockages or jamming even when the speed is high. On the contrary, the speed is kept at a lower value in the event that very short, irregularly shaped or bent pieces have to be transferred, or pieces that for one reason or another could create problems during transfer.

The adjustability of the speed, in another embodiment, can also be correlated to the diameter and/or the length of the piece to be transferred.

The chopping cradle 37 is substantially V-shaped, or has a section defining a line divided into five or more segments, and has a first wall 39a inclined and facing towards the outlet of the cutting assembly 14 and a second wall 39b facing towards the chopping assembly 15, which functions as an abutment during the transfer of the segments of trunk. The first wall 39a has a toothed end edge.

The blades 36 associated with the transporter 35 and the teeth of the first wall 39a are off-set so that, during the transfer of the piece of wood 12, the blades 36 can transit between the empty spaces between the teeth and no spaces are created between the transporter 35 and the chopping cradle 37.

The empty spaces between the teeth are sized so that the transit of the blades 36 is allowed even in the position of maximum oscillation of the chopping cradle 37; this means that it is not necessary to wait for the correct repositioning of the cradle 37 in order to perform a new transfer of wood.

The blades 36, in a preferential embodiment, can be replaced and/or extended. The use of the chain-type transporter 35 to transfer the pieces of cut wood from the feed cradle 20 to the chopping zone allows to operate irrespectively with every diameter of trunk 12, as shown by the lines of dashes in fig. 4, possibly by replacing the blades 36.

It should be considered that, even during the transfer of a first piece of trunk 12, the transporter 35 is already in a condition to receive a second piece of trunk 12 cut subsequently, without requiring repositioning or producing dead times; this allows to increase the productivity of the machine 10.

The chopping assembly 15 comprises, in known manner, the cradle 37, a thruster element 42 and at least a chopping grid 43 provided with a plurality of cutting blades 48.

In a preferential embodiment, the thruster element 42 is driven by at least a double-acting main cylinder, and by at least an auxiliary cylinder able to be driven selectively when high powers are required in order to carry out the chopping.

Advantageously, the chopping grid 43 is of the replaceable type, also automatically and with both horizontal and vertical translation, according to the diameter of the pieces of wood 12 and the shape and desired size of the logs 49. The positioning of the chopping grid is commanded according to the diameter detected of the trunks, both so that the most suitable grid can be selected and also so that the grid can be centered according to the longitudinal axis of the trunk.

Downstream of the chopping assembly the discharge assembly 16 is arranged, comprising a conveyor belt 87 onto which the chopped logs 49 of firewood fall. The conveyor belt 87 can convey the logs 49 to a storage zone or directly onto the body of a truck.

Downstream, and in line with the cutting assembly 14, there is the collection assembly 73, which comprises a conveyor 78 movable from a first position, wherein it cooperates with the cutting assembly 14, aligned with the feed cradle 20, to a second stand-by position. The conveyor 78 serves to directly discharge pieces of branches, faggots, scraps, etc. cut to measure by the saw 27, without passing through the chopping step. The conveyor 78 can also be used for the direct discharge of bent or deformed trunks which are only cut and then, in this case, are treated like faggots or loppings.

The conveyor 78 has two open sides so as to allow the axial insertion of the cut pieces of wood 12, due to the advance of the thruster means 24, or by means of a thrust performed by the pieces of wood themselves cut in the previous cycle.

In a first solution, the conveyor functions only as an axial containing element for the cut pieces of wood, which are then progressively thrust outside it and, by means of a slide, conveyed towards the discharge belt.

According to the variant shown here, the conveyor 78 has a bottom wall 79 that can be selectively opened by means of an actuator 80. The bottom wall 79 remains closed until a desired quantity of pieces of branches or faggots 84 has been loaded inside the conveyor 78, by means of a progressive advance imparted by the thruster means 24 or by the cut pieces of wood.

Then, the bottom wall 79 is opened and the cut branches fall onto the conveyor belt 81, moving in this case on a slide 82 arranged at the side of the belt 81.

Modifications and variants may be made to the present invention, without departing from the field of protection thereof. For example, as said, the machine can be configured only as a chopping machine, excluding the cutting assembly, or as a saw, excluding the transfer assembly and the chopping assembly. Moreover, any suitable cutting means can be used instead of the disk type saw 27.

## Claims

1. Machine for preparing cut and/or chopped firewood, comprising feed means, cutting means (14), gripping means cooperating with the cutting means (14), chopping means (15), collection means and discharge means (16) to discharge the cut and/or chopped pieces, **characterized in that** said gripping means (29), said feed means (13, 25) and said collection means (73) are of the unified type and are able to operate without distinction both on individual trunks (12) of any diameter, shape or size, and also on bundles or groups of trunks (12), branches, loppings or faggots (84), sawmill scraps, carpenter's scraps or other similar element to be cut to size and/or chopped.

2. Machine as in claim 1, **characterized in that** each of said gripping means (29) comprises a substantially L-shaped plate (76) associated with a lifting/lowering actuator (33), lying on a substantially vertical plane, and comprising a pressure element (76a) and a substantially vertical supporting element (76b), said pressure element (76a) having a curved lower edge (77) which, in use, faces the pieces of wood, branches etc. (12, 84) to be cut.

3. Machine as in claim 2, **characterized in that** said curved lower edge (77) includes, at least near its central zone, a wider part able to increase the surface area pressing on said pieces of wood (12, 84).

4. Machine as in claim 2 or 3, **characterized in that** said plate (76) is movable between a first high position to feed the wood, wherein said lower edge (77) does not interfere with the pieces of wood (12, 84) and allows them to advance, and a second guillotine-type clamping position, wherein said lower edge (77) is brought into contact with the pieces of wood (12, 84) in order to keep them pressed and centered at least before and during the cutting operation.

5. Machine as in claim 2, **characterized in that** said pressure element (76a) of said plate (76) has means to detect the diameter of the pieces of wood (12, 84).

6. Machine as in any claim hereinbefore, **characterized in that** it comprises at least one gripping means (29) arranged immediately upstream of the cutting means (14).

7. Machine as in any claim hereinbefore, **characterized in that** that it comprises at least one gripping means (29) arranged upstream of the cutting means (14) and movable on the length of the pieces of wood (12, 84) in order to position itself in a desired position with respect thereto.

8. Machine as in any claim hereinbefore, **characterized in that** said feed means (13) comprise a feed cradle (20) defining a channel in which the pieces of wood (12, 84) move, and trolley means (22) with an alternate linear movement able to translate said pieces of wood (12, 84) longitudinally along the feed cradle (20) until it takes them into cooperation with the cutting means (14).

9. Machine as in claim 8, **characterized in that** said feed cradle (20) has a substantially V-shaped transverse section, or defining a broken line with five or more segments, to contain laterally the pieces of wood (12, 84), and containing side-walls (75).

10. Machine as in any claim hereinbefore, **characterized in that** it has thruster means (24) able to translate said pieces of wood (12, 84) along said feed cradle (20), said thruster means (24) consisting of substantially plane plate means (60) mounted on a supporting arm (61) pivoting with respect to a pin (62).

11. Machine as in claim 10, **characterized in that** said plate means (60) are able to assume a first lowered thrusting position (60a), to translate pieces of wood (12, 84) along the feed cradle (20), and at least a second raised position (60b), assumed at least in the return to a start-of-cycle position, free from interference with the feed cradle (20).

12. Machine as in claim 11, **characterized in that** said position of non-interference with the feed cradle (20) is such as to allow new pieces of wood (12, 84) to be positioned inside the feed cradle (20) whatever their size or type.

13. Machine as in claim 11, **characterized in that**, after every thrust cycle of the pieces of wood (12, 84) along the feed cradle (20), said thruster means (24) are able to return to a substantially pre-established start-of-cycle position

14. Machine as in claim 11, **characterized in that**, after every thrust cycle of the pieces of wood (12, 84) along the feed cradle (20), said thruster means (24) are able to return to a start-of-cycle position correlated with the end of said pieces of wood (12, 84) and far from the cutting means (14).

15. Machine as in any claim hereinbefore, **characterized in that** it comprises a transfer assembly (25) to translate the cut pieces of wood (12) towards a chopping zone.

16. Machine as in claim 15, **characterized in that** said transfer assembly (25) comprises a chain-type transporter (35) provided with a plurality of blade elements (36) able to transfer the cut pieces of wood (12) towards a chopping cradle (37) associated with the chopping means (15).

17. Machine as in claim 16, **characterized in that** said transfer assembly (25) includes, at least downstream of said blade elements (36), means (90) able to prevent the cut pieces of wood (12, 84) from rolling over during their advance towards said chopping means (15).

18. Machine as in claim 16, **characterized in that** said chain-type transporter (35) is able to be driven in two directions and includes a first direction of normal feed to transfer pieces of wood (12, 84) towards said chopping means (15), and a second, opposite direction of feed to discharge pieces of wood (12, 84) that have been cut but are not suitable to be sent for chopping.

19. Machine as in claim 16, **characterized in that** said chain-type transporter (35) is able to be driven at a speed that can vary at least according to the size and type of the pieces of wood (12, 84) to be transferred.

20. Machine as in claim 16, **characterized in that** said chopping cradle (37) yields forwards in order to support the chopping pressures.

21. Machine as in claim 16, **characterized in that** said chopping cradle (37) is substantially V-shaped, or defines a broken line with five or more segments, and has a first inclined wall (39a) facing towards the outlet of the cutting means (14) and a second wall (39b) facing towards the chopping means (15).

22. Machine as in claim 21, **characterized in that** said first wall (39a) has a toothed end edge able to cooperate with said blade elements (36) of said transporter (35), the teeth of said first wall (39a) being off-set so that, during the transfer of the piece of wood (12), said blade elements (36) can pass between the empty spaces between the teeth.

23. Machine as in claim 22, **characterized in that** said empty spaces between the teeth of said first wall (39a) are sized so that the passage of said blade elements (36) is allowed even in the position of maximum oscillation of the chopping cradle (37).

24. Machine as in claim 16, **characterized in that** said blade elements (36) can be replaced and/or extended.

25. Machine as in claim 16, **characterized in that** said chopping cradle (37) has discharge holes on the bottom in order to discharge small pieces or fragments of pieces of wood (12).

26. Machine as in claim 1, **characterized in that** said collection means (73) comprise a conveyor (78) movable between a first position of cooperation with said cutting means (14), and in line therewith, and a second remote stand-by position.

27. Machine as in claim 26, **characterized in that** said conveyor (78) has at least a bottom wall (79) able to be selectively opened in order to discharge a desired quantity of pieces of branches or faggots (84) onto discharge means (87).

28. Machine as in claim 1, **characterized in that** it comprises loading means (11) able to pick up said pieces of wood (12, 84) from an accumulation zone and to transfer them towards said feed means, said loading means comprising a plurality of hooked teeth (19) able to separate from each other some of said pieces of wood (12, 84) and to unload them selectively into said feed means.

29. Machine as in claim 28, **characterized in that** said teeth (19) are of the pivoting type so as to assume a first position above the supporting plane of the loading means (11) and a second position below it in order to let the pieces of wood (12, 84) pass beyond said teeth (19).

30. Machine as in claim 29, **characterized in that** said teeth (19) have a hooked end able to be inserted between two adjacent trunks (12), or between a bundle of loppings or faggots (84), and a curved rear profile to slide on said trunks (12) or faggots (84) when said teeth (19) move into said second retracted position.
